# EUROPÄISCHE PATENTSCHRIFT

(11) **EP 1 431 164 B1**
(45) Veröffentlichungstag und Bekanntmachung des Hinweises auf die Patenterteilung: **01.12.2004**
(21) Anmeldenummer: 03029257.7
(22) Anmeldetag: 17.12.2003
(51) Int. Cl.: B62D 25/08, B62D 27/02

(54) **Hinteres Kraftfahrzeugheck**
Rear corner of a vehicle
Partie arrière de coin d'un véhicule

(30) Priorität: 19.12.2002 DE 10259432
(43) Veröffentlichungstag der Anmeldung: 23.06.2004
(73) Patentinhaber: Adam Opel AG, 65423 Rüsselsheim (DE)
(72) Erfinder: Bechtold, Ralf-Dieter, 55278 Weinolsheim (DE); Görg, Christian Andreas, 85247 Schwabhausen (DE)

(56) Entgegenhaltungen:
- EP-A- 0 519 776
- DE-C- 19 630 899
- US-A- 2 194 356
- US-A- 5 597 198
- PATENT ABSTRACTS OF JAPAN vol. 006, no. 187 (M-158), 25. September 1982 (1982-09-25) -& JP 57 095263 A (MAZDA MOTOR CORP), 14. Juni 1982 (1982-06-14)

## Beschreibung

Die Erfindung bezieht sich auf ein Kraftfahrzeugheck mit einem Hinterrahmen, welcher zwei Längsträger aufweist, die mit einer unteren Rückwand verbunden sind, welche Verstärkung zweischalig aus einer inneren Rückwand und einer äußeren Rückwand gebildet ist und deren äußere Rückwand mit einem Stoßfänger verbunden ist.

Heutige Personenkraftwagen weisen ein solches Kraftfahrzeugheck auf. Die zweischalige Ausbildung der Rückwand führt dazu, dass aus ihr ein stabiler Querträger entsteht, der die beiden Längsträger des Hinterrahmens miteinander verbindet, so dass die Karosserie eine hohe Torsionssteifigkeit erhält. Nachteilig bei einem solchen Kraftfahrzeugheck ist es jedoch, dass es durch die Befestigung des Stoßfängers an der Rückwand schon bei einem Aufprall mit relativ geringen Geschwindigkeiten zu hohem Schaden kommen kann, weil die zweischalige Rückwand sich leicht verformt. Die Reparatur solcher zweischaligen Rückwände ist jedoch teuer, so dass Fahrzeuge der vorstehenden Art bei der Vollkaskoversicherung ungünstig eingestuft werden müssen.

Ein weiterer Nachteil von heutigen Personenkraftwagen, die eine zweischaltige Ausbildung der Rückwand aufweisen, ist, dass man zur Beibehaltung der erforderlichen Torsionssteifigkeit die Rückwand relativ weit nach oben führen muss, was zu einer Vergrößerung der Überladehöhe führt, so dass Gepäckstücke unerwünscht weit hochgehoben werden müssen, um sie in den Kofferraum ablegen zu können.

Ein gattungsgemäßes Kraftfahrzeugheck ist auch aus JP-A-57095263 bekannt.

Der Erfindung liegt das Problem zugrunde, ein Fahrzeugheck der eingangs genannten Art so zu gestalten, dass bei Krafteinleitung in die Karosserie über den rückwärtigen Stoßfänger möglichst kein oder nur geringer Schaden an der Rückwand entsteht, ohne dass hierzu die Rückwand zur Erhaltung der notwendigen Torsionssteifigkeit unerwünscht weit nach oben geführt werden muss.

Dieses Problem wird erfindungsgemäß dadurch gelöst, dass die beiden Längsträger jeweils durch eine Ausnehmung der inneren Rückwand hindurchführen und mit der äußeren Rückwand verbunden sind.

Durch diese Gestaltung werden im Falle eines Aufpralls die Kräfte von der Stoßstange unmittelbar in die beiden Längsträger des Hinterrahmens eingeleitet. Dadurch kann die Verformungsmöglichkeit des Stoßfängers voll genutzt werden, bevor es zu einer Beschädigung der zweischaligen Rückwand kommt. Das führt dazu, dass sich bei Unfällen mit geringer Geschwindigkeit eine Beschädigung der Rückwand gänzlich vermeiden lässt, so dass in vielen Fällen lediglich der Stoßfänger auszutauschen ist.

Besonders vorteilhaft ist es, wenn gemäß einer Weiterbildung der Erfindung an den rückwärtigen Enden beider Längsträger jeweils eine senkrecht ausgerichtete Befestigungsplatte für den Stoßfänger angebracht ist, gegen die von außen her die äußere Rückwand anliegt. Solche Befestigungsplatten erleichtern die Montage des Stoßfängers und erlauben eine optimale Krafteinleitung von der Stoßstange in den Hinterrahmen.

Die beiden Längsträger der Hinterrahmen können dünnwandig ausgeführt sein, wenn im Bereich der inneren Rückwand die beiden Längsträger jeweils von unten her mit einem im Querschnitt U-förmigen Verstärkungsteil umgriffen sind und die Befestigungsplatte mit diesem Verstärkungsteil verbunden ist. Durch ein solches Verstärkungsteil kann man die Festigkeit der Längsträger im Bereich der Anbindung des Stoßfängers gezielt erhöhen.

Ein solches Verstärkungsteil kann so ausgeführt werden, dass sein Boden unterhalb des Längsträgers verläuft und dabei zum Heck stärker abfällt als der Längsträger. Dies hat den Vorteil, dass die Befestigungsplatte weiter nach unten reicht und damit der Stoßfänger weiter unten angeordnet werden kann, so dass seine Oberkante noch unter der Oberkante des Längsträgers bleibt und damit die Überladehöhe niedrig bleibt.

Eine besonders gute Abstützung des Stoßfängers erhält man, wenn der Boden des Verstärkungsteils und der Längsträger einen zum Heck hin sich öffnenden keilförmigen Spalt bilden. Der Boden des Verstärkungsteils wirkt wie eine Schrägstütze, die die in den unteren Bereich des Stoßfängers eingeleiteten Kräfte in den Längsträger leitet. Die Längssteifigkeit wird dadurch ohne Steifigkeitssprung erhöht. Außerdem ermöglicht das Verstärkungsteil die Anpassung einer einzigen Rahmenkonstruktion an verschiedene Fahrzeugausführungen.

Die Befestigung der Befestigungsplatte kann auf einfache Weise am Verstärkungsteil erfolgen, wenn das Verstärkungsteil an seiner der äußeren Rückwand zugewandten Seite einen nach außen gerichteten Befestigungsflansch aufweist.

Günstig ist es auch, wenn die Befestigungsplatte mit einer horizontalen Abbiegung von oben her auf dem jeweiligen Längsträger und dem Verstärkungsteil aufliegt. Hierdurch ist die Befestigungsplatte besonders fest mit dem Längsträger verbunden.

Zur einfachen Montage des Stoßfängers trägt es bei, wenn gemäß einer anderen Weiterbildung der Erfindung die Befestigungsplatte mehrere Befestigungsbolzen aufweist, welche die äußere Rückwand durchdringen und zur Befestigung des Stoßfängers ausgebildet sind.

Günstig ist auch eine Ausgestaltung der Erfindung, gemäß der die den Hinterrahmen bildenden Längsträger als U-förmiges, nach oben hin offenes Profil ausgebildet sind. Ein solcher Hinterrahmen ist kostengünstig herzustellen und wird im Bereich des Fahrzeughecks auf einfache Weise vom Bodenblech nach oben hin geschlossen.

Im Folgenden wird anhand eines Ausführungsbeispiels unter Bezugnahme auf eine Zeichnung die Erfindung näher erläutert. Diese zeigt in
- Fig. 1: einen schematischen Schnitt durch die Mitte eines Hinterrahmens eines erfindungsgemäßen Fahrzeughecks,
- Fig. 2: eine perspektivische Darstellung eines linken Hinterrahmenbereiches in einer ersten Ausbaustufe,
- Fig. 3: den linken Hinterrahmenbereich in einer zweiten Ausbaustufe,
- Fig. 4: den linken Hinterrahmenbereich in einer dritten Ausbaustufe.

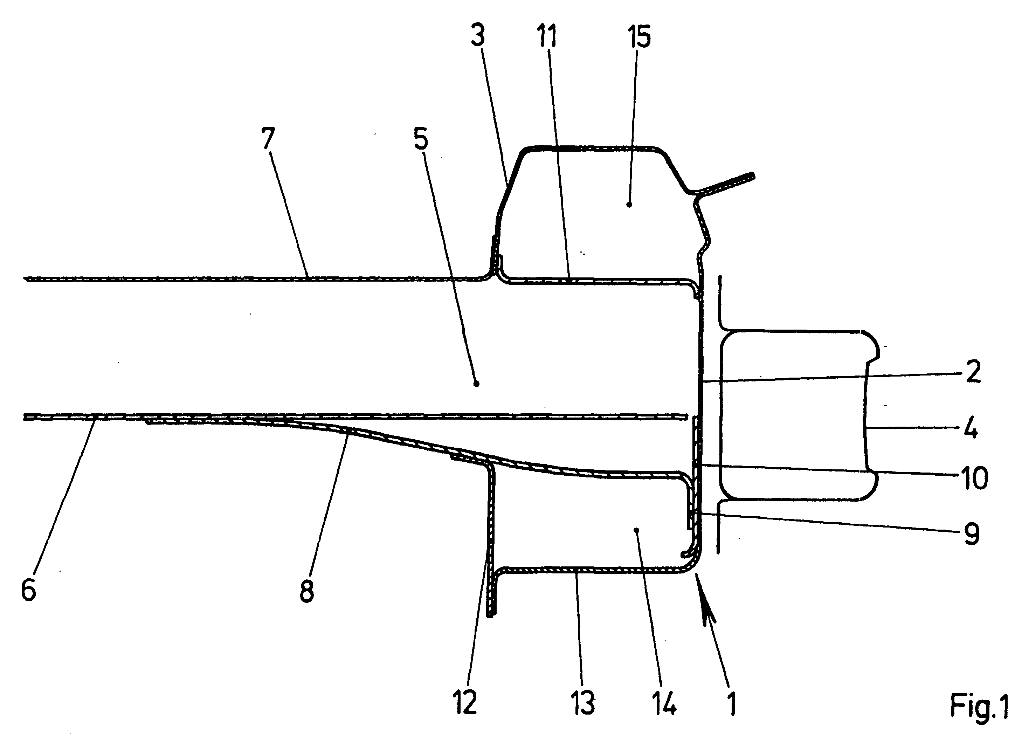

In Figur 1 ist eine Rückwand 1 dargestellt, die aus einer äußeren Rückwand 2 und einer inneren Rückwand 3 gebildet und deshalb zweischalig ist. An der äußeren Rückwand 2 liegt ein Stoßfänger 4 an.

Um eine Beschädigung der Rückwand 1 bei einem Aufprall mit geringer Geschwindigkeit zu vermeiden, hat die innere Rückwand 3 eine Ausnehmung 5, durch die ein Längsträger 6 eines ansonsten nicht gezeigten Fahrzeugrahmens hindurch bis unmittelbar vor die äußere Rückwand 2 führt. Dieser Längsträger 6 ist als U-förmiges, nach oben hin offenes Profil ausgebildet und wird nach oben hin im Fahrzeuginneren durch ein Bodenblech 7 verschlossen. Von unten her wird der Längsträger 6 im Endbereich von einem ebenfalls U-förmigen Verstärkungsteil 8 umgriffen. Sein Querschnitt wird zum Heck hin größer, wodurch der Boden des Verstärkungsteils 8 zum Heck nach unten abfällt. Das Verstärkungsteil 8 endet an der Seite der äußeren Rückwand 2 mit einem Befestigungsflansch 9, gegen den von außen her eine Befestigungsplatte 10 anliegt. Diese Befestigungsplatte 10 liegt von oben her mit einer Abbiegung 11 auf dem Längsträger 6 auf und ist dort mit diesem verbunden. Die äußere Rückwand 2 stützt sich auf der Befestigungsplatte 10 ab. Dadurch werden auf den Stoßfänger 4 einwirkende Kräfte unmittelbar über die Befestigungsplatte 10 in den Längsträger 6 und das Verstärkungsteil 8 eingeleitet. Dieses besteht vorzugsweise aus hochfestem Stahl oder einem Faserstahl, so dass der Längsträger selbst aus einem Stahlblech geformt sein kann, ohne dass Steifigkeitsverluste zu befürchten sind.

Ebenfalls zu erkennen ist in Figur 1, dass die Rückwand 1 im unteren Bereich durch zwei Wandbereiche 12, 13, das Verstärkungsteil 8 und die äußere Rückwand 2 ein geschlossenes Profil 14 bildet, so dass eine große Festigkeit entsteht. Im oberen Bereich bildet entsprechend die innere Rückwand 3 mit der äußeren Rückwand 2 und der Abbiegung 11 ein geschlossenes Profil 15.

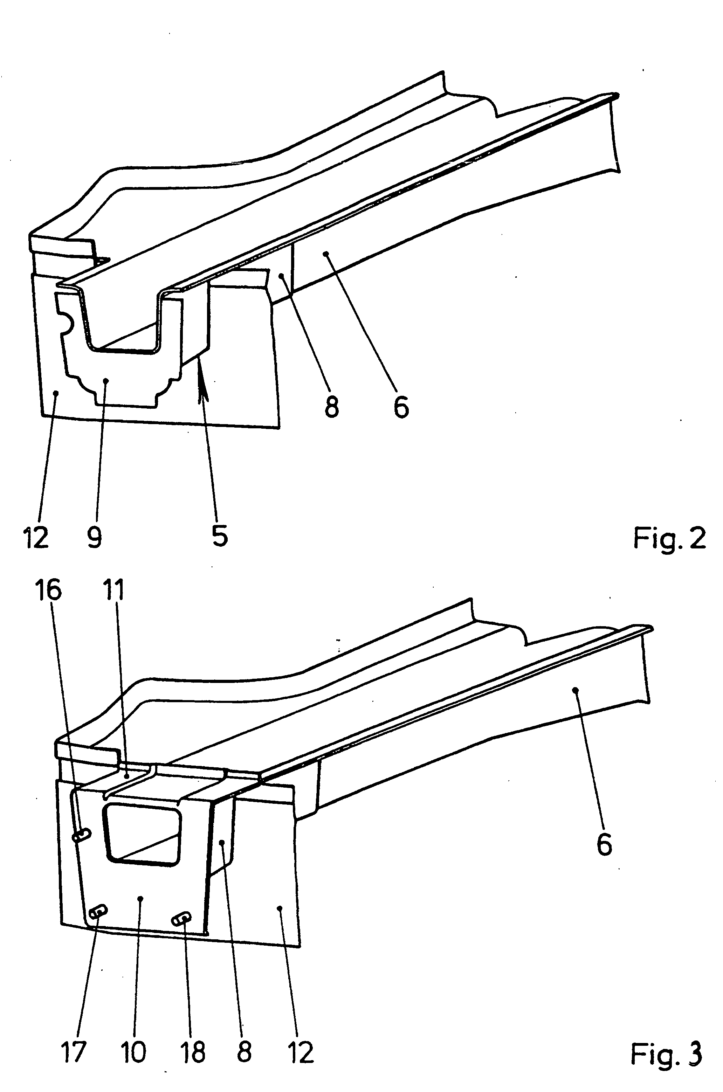

Die Figur 2 zeigt perspektivisch den Endbereich des zum Hinterrahmen gehörenden Längsträgers 6 und verdeutlicht, wie dieser von unten her von dem U-förmigen Verstärkungsteil 8 umgriffen ist. Ebenfalls zu erkennen ist der Flansch 9 des Verstärkungsteils 8. Weiterhin sieht man den Wandbereich 12 der inneren Rückwand 3 und sieht, wie der Längsträger 6 mit dem Verstärkungsteil 8 durch die Ausnehmung 5 hindurch führt.

In der Ausbaustufe nach Figur 3 ist der Längsträger 6 mit dem Verstärkungsteil 8 nach hinten hin von der Befestigungsplatte 10 verschlossen. Diese liegt mit ihrer horizontalen Abbiegung 11 von oben her auf dem Längsträger 6 auf. Der senkrechte Bereich der Befestigungsplatte 10 hat drei Befestigungsbolzen 16, 17, 18, welche im endgültigen Montagezustand die äußere Rückwand 2 durchdringen und der Befestigung des in Figur 1 gezeigten Stoßfängers 4 dienen.

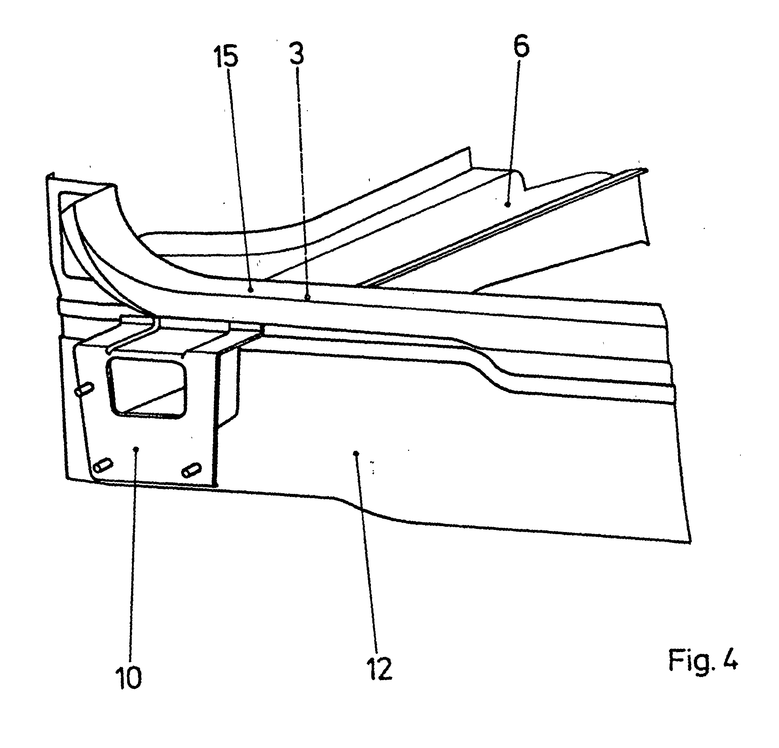

Die Figur 4 zeigt zusätzlich das quer zu dem Kraftfahrzeug verlaufende Profil 15, welches teilweise durch die innere Rückwand 3 gebildet wird. Weiterhin sieht man den Wandbereich 12, der beim fertigen Fahrzeug von der in Figur 4 nicht gezeigten äußeren Rückwand 2 verdeckt wird, die gegen die Befestigungsplatte 10 anliegt.

### Bezugszeichenliste

- 1: Rückwand
- 2: äußere Rückwand
- 3: innere Rückwand
- 4: Stoßfänger
- 5: Ausnehmung

- 6: Längsträger
- 7: Bodenblech
- 8: Verstärkungsteil
- 9: Flansch
- 10: Befestigungsplatte

- 11: Abbiegung
- 12: Wandbereich
- 13: Wandbereich
- 14: Profil
- 15: Profil

## Patentansprüche

1. Kraftfahrzeugheck mit einem Hinterrahmen, welcher zwei Längsträger (6) aufweist, die mit einer unteren Rückwand (1) verbunden sind, welche zur Verstärkung zweischalig aus einer inneren Rückwand (3) und einer äußeren Rückwand (2) gebildet ist und deren äußere Rückwand (2) mit einem Stoßfänger (4) verbunden ist, **dadurch gekennzeichnet, dass** die beiden Längsträger (6) jeweils durch eine Ausnehmung (5) der inneren Rückwand (3) hindurchführen und mit der äußeren Rückwand (2) verbunden sind.

2. Kraftfahrzeugheck nach Anspruch 1, **dadurch gekennzeichnet, dass** an den rückwärtigen Enden beider Längsträger (6) jeweils eine senkrecht ausgerichtete Befestigungsplatte (10) für den Stoßfänger (4) angebracht ist, gegen die von außen her die äußere Rückwand (2) anliegt.

3. Kraftfahrzeugheck nach Anspruch 2, **dadurch gekennzeichnet, dass** im Bereich der inneren Rückwand (3) die beiden Längsträger (6) jeweils von unten her mit einem im Querschnitt U-förmigen Verstärkungsteil (8) umgriffen sind und die Befestigungsplatte (10) mit diesem Verstärkungsteil (8) verbunden ist.

4. Kraftfahrzeugheck nach Anspruch 3, **dadurch gekennzeichnet, dass** das Verstärkungsteil (8) einen Boden unterhalb des Längsträgers (6) aufweist und dass der Boden zum Heck stärker abfällt als der Längsträger (6).

5. Kraftfahrzeugheck nach Anspruch 4, **dadurch gekennzeichnet, dass** der Boden des Verstärkungsteils (8) und der Längsträger (6) einen zum Heck hin sich öffnenden keilförmigen Spalt bilden.

6. Kraftfahrzeugheck nach Anspruch 3, 4 oder 5, **dadurch gekennzeichnet, dass** das Verstärkungsteil (8) an seiner der äußeren Rückwand (2) zugewandten Seite einen nach außen gerichteten Befestigungsflansch (9) aufweist.

7. Kraftfahrzeugheck nach zumindest einem der vorangehenden Ansprüche, **dadurch gekennzeichnet, dass** die Befestigungsplatte (10) mit einer horizontalen Abbiegung (11) von oben her auf dem jeweiligen Längsträger (6) und dem Verstärkungsteil (8) aufliegt.

8. Kraftfahrzeugheck nach zumindest einem der vorangehenden Ansprüche, **dadurch gekennzeichnet, dass** die Befestigungsplatte (10) mehrere Befestigungsbolzen (16, 17, 18) aufweist, welche die äußere Rückwand (2) durchdringen und zur Befestigung des Stoßfängers (4) ausgebildet sind.

9. Kraftfahrzeugheck nach zumindest einem der vorangehenden Ansprüche, **dadurch gekennzeichnet, dass** die den Hinterrahmen bildenden Längsträger (6) als U-förmiges, nach oben hin offenes Profil ausgebildet sind.

## Claims

1. Motor vehicle rear end with a rear frame which has two longitudinal members (6) which are connected to a lower rear wall (1) which for reinforcement is formed with two sheets comprising an inner rear wall (3) and an outer rear wall (2) and of which the outer rear wall (2) is connected to a bumper (4), **characterised in that** the two longitudinal members (6) in each case lead through a recess (5) in the inner rear wall (3) and are connected to the outer rear wall (2).

2. Motor vehicle rear end according to claim 1, **characterised in that** at each of the rear ends of the two longitudinal members (6) is mounted a vertically oriented fastening plate (10) for the bumper (4), against which the outer rear wall (2) abuts from the outside.

3. Motor vehicle rear end according to claim 2, **characterised in that** in the region of the inner rear wall (3) the two longitudinal members (6) are in each case encompassed from below by a reinforcing member (8) of U-shaped cross-section, and the fastening plate (10) is connected to this reinforcing member (8).

4. Motor vehicle rear end according to claim 3, **characterised in that** the reinforcing member (8) has a bottom below the longitudinal member (6) and **in that** the bottom slopes down to the rear end more steeply than the longitudinal member (6).

5. Motor vehicle rear end according to claim 4, **characterised in that** the bottom of the reinforcing member (8) and the longitudinal member (6) form a wedge-shaped gap which opens towards the rear end.

6. Motor vehicle rear end according to claim 3, 4 or 5, **characterised in that** the reinforcing member (8) has an outwardly directed fastening flange (9) on its side facing towards the outer rear wall (2).

7. Motor vehicle rear end according to one or more of the preceding claims, **characterised in that** the fastening plate (10) with a horizontal bent portion (11) rests from above on the respective longitudinal member (6) and on the reinforcing member (8).

8. Motor vehicle rear end according to one or more of the preceding claims, **characterised in that** the fastening plate (10) has several fastening bolts (16, 17, 18) which pass through the outer rear wall (2) and are designed for fixing the bumper (4).

9. Motor vehicle rear end according to one or more of the preceding claims, **characterised in that** the longitudinal members (6) forming the rear frame are designed as a U-shaped profile which opens upwardly.

## Revendications

1. Structure arrière d'un véhicule automobile avec un châssis arrière, qui présente deux longerons (6), qui sont assemblés à une paroi arrière (1) inférieure qui, en vue d'un renforcement, est formée par deux coques formant une paroi arrière intérieure (3) et une paroi arrière extérieure (2) et dont la paroi arrière extérieure (2) est assemblée à un pare-chocs (4), **caractérisée en ce que** les deux longerons (6) passent chacun à travers un évidement (5) dans la paroi arrière intérieure (3) et sont assemblés à la paroi arrière extérieure (2).

2. Structure arrière d'un véhicule automobile selon la revendication 1, **caractérisée en ce que**, au niveau des extrémités arrières de chacun des deux longerons (6), est agencée une plaque de fixation (10) pour le pare-chocs (4), laquelle est orientée verticalement et contre laquelle vient en appui de l'extérieur la paroi arrière extérieure (2).

3. Structure arrière d'un véhicule automobile selon la revendication 2, **caractérisée en ce que**, dans la zone de la paroi arrière intérieure (3), les deux longerons (6) sont reçus chacun par le bas dans un élément de renfort (8) avec une section en U et la plaque de fixation (10) est assemblée avec cet élément de renfort (8).

4. Structure arrière d'un véhicule automobile selon la revendication 3, **caractérisée en ce que** l'élément de renfort (8) présente une base qui s'étend en dessous du longeron (6) et **en ce que** la base, en allant vers l'arrière, est nettement plus inclinée vers le bas que le longeron (6).

5. Structure arrière d'un véhicule automobile selon la revendication 4, **caractérisée en ce que** la base de l'élément de renfort (8) et le longeron (6) forment une fente s'ouvrant en forme de cône vers l'arrière.

6. Structure arrière d'un véhicule automobile selon la revendication 3, 4 ou 5, **caractérisée en ce que** l'élément de renfort (8), sur sa face orientée vers la paroi arrière extérieure (2), présente une bride de fixation (9) orientée vers l'extérieur.

7. Structure arrière d'un véhicule automobile selon l'une quelconque des revendications précédentes, **caractérisée en ce que** la plaque de fixation (10) est mise en appui par le haut avec un coude horizontal (11) sur le longeron (6) concerné et l'élément de renfort (8).

8. Structure arrière d'un véhicule automobile selon l'une quelconque des revendications précédentes, **caractérisée en ce que** la plaque de fixation (10) présente plusieurs boulons de fixation (16, 17, 18), qui passent à travers la paroi arrière extérieure (2) et sont conçus pour la fixation du pare-chocs (4).

9. Structure arrière d'un véhicule automobile selon l'une quelconque des revendications précédentes, **caractérisée en ce que** les longerons (6) formant le châssis arrière sont formés par des profilés en U ouverts vers le haut.
